# EUROPÄISCHE PATENTSCHRIFT

(11) **EP 3 455 683 B1**
(45) Veröffentlichungstag und Bekanntmachung des Hinweises auf die Patenterteilung: **02.11.2022**
(21) Anmeldenummer: 17726560.0
(22) Anmeldetag: 10.05.2017
(51) Int. Cl.: G05B 19/4065

(54) **SYSTEM UND VERFAHREN ZUR VERARBEITUNG VON WERKZEUGBEZOGENEN DATEN**
SYSTEM AND METHOD FOR PROCESSING TOOL-RELATED DATA
SYSTÈME ET PROCÉDÉ POUR TRAITER DES DONNÉES RELATIVES À UN OUTIL

(30) Priorität: 10.05.2016 DE 102016108644
(43) Veröffentlichungstag der Anmeldung: 20.03.2019
(73) Patentinhaber: Mimatic GmbH, 87488 Betzigau (DE)
(72) Erfinder: SCHOPPE, Karl-Heinz, Oy-Mittelberg 87466 (DE)
(74) Vertreter: VKK Patentanwälte PartG mbB
(86) Internationale Anmeldenummer: PCT/EP2017/061209
(87) Internationale Veröffentlichungsnummer: WO 2017/194617

(56) Entgegenhaltungen:
- EP-A1- 3 001 265
- EP-A1- 3 002 650
- WO-A1-00/36543
- WO-A1-2014/053048
- WO-A2-2005/038613
- DE-A1-102013 107 307
- US-A1- 2013 097 276
- US-A1- 2015 134 733
- Anonymous: "Datenkompression", Wikipedia, 11 February 2014 (2014-02-11), pages 1-8, XP055522735, Retrieved from the Internet: URL:https://de.wikipedia.org/wiki/Datenkom pression [retrieved on 2018-11-12]

## Beschreibung

Die vorliegende Erfindung betrifft ein System und ein Verfahren zur Verarbeitung von werkzeugbezogenen Daten aus angetriebenen Werkzeugen.

Angetriebene Werkzeuge, bei denen ein drehendes Bauteil (Welle) in einer Trägereinheit drehbar gelagert ist, sind einem hohen Verschleiß ausgesetzt und müssen daher überwacht und rechtzeitig ersetzt oder instandgesetzt werden. Beispiele für derartige angetriebene Werkzeuge sind solche für CNC-Bearbeitungszentren für Metall oder Holz, CNC-Drehmaschinen, die neben dem Drehen auch Fräsen oder Bohren außerhalb der Drehmitte erlauben. Die angetriebenen Werkzeuge sind insbesondere Winkelbohr- und Fräsköpfe, aber auch solche, die Fräswerkzeuge, Schneidwerkzeuge, Kegelsenker, Bohrer, Gewindebohrer oder Nutenstoßaggregate aufnehmen oder sein können.

Gerade im Bereich der automatisierten Fertigung ist es für solche Werkzeuge erstrebenswert, den tatsächlichen Ermüdungs- oder Verschleißzustand des Werkzeuges zu erfassen, um rechtzeitig vor einem Schadensfall eine vorbeugende Instandhaltung durchführen zu können, um somit sowohl diesen Schadensfall als auch einen verfrühten und damit überflüssigen Austausch zu vermeiden. Mit anderen Worten sollen Wartungen und Instandhaltungen erfindungsgemäß nur dann durchgeführt werden, wenn sie tatsächlich erforderlich sind, um Kosten und Betriebsstillstände der Werkzeugmaschinen gering zu halten. Die Entscheidung zum Werkzeugaustausch oder zur Werkzeugwartung beruhte bislang in erster Linie auf der Erfahrung des Maschinenführers.

Aus dem Stand der Technik ist es allgemein bekannt, bestimmte Daten über den Zustand von Maschinen oder Maschinenteilen zu erfassen, insbesondere in Form von Verschleiß- oder Verbrauchsindikatoren. Diese belegen bestimmte Zustände eines Gegenstandes über einen Zeitraum hinweg. Hierbei kann es sich beispielsweise um über die Bordelektrik versorgte Betriebsstundenzähler handeln, die oftmals bei landwirtschaftlichen Kraftfahrzeugen eingesetzt werden. Eine vorbeugende Instandhaltung wird bei diesen Kraftfahrzeugen durchgeführt, wenn eine vorbestimmte Anzahl an Betriebsstunden erreicht ist.

Bekannte Vorrichtung zur Erfassung derartiger Verschleiß- oder Verbrauchsindikatoren können beispielsweise auch Vibrationsmesser sein, wie sie bei Hubschraubern eingesetzt werden. Diese erfassen sich mit zunehmender Betriebsdauer ändernde Schwingungsmuster hoch belasteter Antriebsteile wie Rotor und Antriebswelle. Hierbei ist das Schwingungsmuster der Indikator für eine vorbeugende Instandhaltung, welches vom einem über die Bordelektrik versorgen Vibrationsmesser erfasst und mit einem hinterlegten Schwingungsmuster verglichen wird. Ein so erzeugter Wert kann mittels eines Auslesegerätes ausgelesen werden, welches über ein BUS-System mit dem Auslesegerät kommuniziert.

Eine bekannte Vorrichtung zur Datenerfassung sind beispielsweise auch passive RFID-Transponder in Werkzeugen für Werkzeugmaschinen. Die Werkzeugmaschine erkennt das Werkzeug mittels eines Auslesegerätes, sobald es an ihrer Spindel befestigt wird. Hierbei versorgt das Auslesegerät den passiven Transponder mit elektrischer Energie während des Auslesevorganges. Der RFID-Chip muss dabei regelmäßig aktiv mit aktuellen Daten bespielt werden, Nutzungsdaten werden im Hintergrund auf Servern verrechnet. Die Bereitschaftsstunden des Werkzeuges werden vom Auslesegerät anhand der Spindelbefestigungszeiten berechnet. Nachteilig ist jedoch, dass die Bereitschaftsstunden regelmäßig nicht mit den tatsächlich geleisteten Betriebsstunden übereinstimmen, da die Spindel oftmals kein eigenes Auslesegerät aufweist. Darüber hinaus ist eine kontinuierliche Erfassung der Betriebsstunden nicht möglich. Die geschilderte nicht exakte Erfassung der geleisteten Betriebsstunden ist jedoch unzureichend, um eine begründete Entscheidung zum Werkzeugaustausch oder zur Werkzeugwartung zu treffen.

Aus der US 2005/017602 A1 ist eine Vorrichtung zur Überwachung einer Welle bekannt, die Energie aus dem zu überwachenden System erntet - insbesondere über Induktion - diese in einer Batterie speichert und die Energie zur Erlangung und Versendung von Daten über das System verwendet. Diese Vorrichtung überwacht die Winkelgeschwindigkeit und das Drehmoment der Welle und beinhaltet einen Sensor, eine Sensorkonditionierungsschaltung, einen Mikroprozessor und einen Transmitter, die sämtlich auf der Welle angeordnet sind. Diese Vorrichtung ist einsetzbar für Maschinen, insbesondere Pumpen, Motoren, Kompressoren, Mahlwerke, Drehmaschinen aber auch Reifen. Diese Vorrichtung soll über die Lebenszeit der Maschine ihre jeweiligen Zustände melden und hierdurch die Wartungsintervalle verbessern. Gleichzeitig wird eine Datenanalyse und -speicherung offenbart.

Aus der EP 3 002 650 A1 ist eine Vorrichtung zur serienmäßigen Bearbeitung und/oder Herstellung eines Werkstückes bekannt, aufweisend ein Werkzeug mit Messmitteln, einen Datenspeicher, einen Transceiver, eine Energieversorgung und eine Vorrichtungssteuerung, weiter aufweisend eine Software und eine Nutzerschnittstelle, wobei das Werkzeug die Daten erfassend und speichernd ist. Das damit verbundene Verfahren sieht vor, dass die am Werkzeug aufgenommenen Daten lokal zwischengespeichert und an eine Koordinierungseinrichtung gegeben werden.

Aus der WO 00/36543 A1 ist ein Schleifrad bekannt, aufweisend Sensoren, einen Transmitter, Batterien, einen Multiplexer als Steuereinheit, eine Software, eine Datenbank und eine Nutzerschnittstelle, wobei das Werkzeug die Daten erfasst und die Datenbank die Daten aufbereitet.

Aus der EP 3 001 265 A1 ist ein System bekannt, aufweisend ein Werkzeug, Sensoren, eine Steuerung, eine Anwendungssoftware, eine Datenbank und eine Nutzerschnittstelle, wobei die Datenbank die Daten aufbereitet wiedergibt.

Aus der US 2013/097276 A1 ist ein System bekannt, aufweisend Sensoren, ein RF-Modul, welches die von den Sensoren aufgenommenen Daten an ein Coordinator Gateway sendet, von dem aus die Daten auf einen cloud server übermittelt werden, auf den wiederum Nutzerschnittstellen wie Smartphones oder PCs zugreifen können.

Aus der WO 2005/038613 A2 ist ein System bekannt, aufweisend eine Nutzerschnittstelle, Sensoren, eine Software zur Datenbearbeitung und Voreinstellung und einen Speicher.

Aus der DE 10 2013 107 307 A1 ist ein Verfahren zu Erfassung und Verarbeitung von Informationen über den Zustand eines Werkzeugs zur Vermeidung bzw. Verkürzung von Ausfällen des Werkzeugs bekannt, bei dem werkzeugspezifische Informationen am Werkzeug gespeichert werden.

Aus der WO 2014/053048 A1 ist ein intelligentes Werkzeug bekannt, welches zur Kommunikation mit externen Modulen ausgelegt ist, insbesondere mit einem als mobil ausgelegten ersten Gerät, wobei letzteres mit einem zweiten Gerät kommuniziert, beispielsweise einer Datenbank. Dabei ist vorgesehen, dass das Werkzeug einen Arbeitsparameter bei Einsatz an einem Werkstück misst, verarbeitet, speichert und weiterleitet an das erste Gerät. Zudem ist daraus die werkstückspezifische Automatisierung und Planung von Werkstückbearbeitungsabläufen und deren Voreinstellung bekannt.

Die vorliegende Erfindung stellt sich die Aufgabe, einem Benutzer eines angetriebenen Werkzeuges ein System und Verfahren zur Verarbeitung von werkzeugbezogenen Daten zur Verfügung zu stellen, mit dem dieser den Zustand seiner angetriebenen Werkzeuge kontinuierlich und dauerhaft überwachen und visualisieren kann.

Die verfahrensbezogene Aufgabe der Erfindung wird gelöst durch ein Verfahren zur kontinuierlichen und dauerhaften Überwachung des Zustands eines maschinell angetriebenen Werkzeugs und zur Erfassung und Aufbereitung von werkzeugbezogenen Daten des Werkzeugs mittels eines Systems, das System umfassend:
ein Datentransfermodul mit einer Anwendungssoftware, eine Datenbank mit einer Nutzerschnittstelle und wenigstens ein maschinell angetriebenes Werkzeug aufweisend Sensoren, einen Speicher, eine Energieversorgung und eine Steuerung,
das Verfahren aufweisend die Schritte:
   a) Erfassen von werkzeugbezogenen Daten durch das maschinell angetriebene Werkzeug unter Verwendung der Sensoren und der Steuerung,
   b) Speichern der erfassten werkzeugbezogenen Daten auf dem Speicher im Werkzeug,
   c) Übertragen der im Werkzeug gespeicherten werkzeugbezogenen Daten auf ein mobiles Datentransfermodul unter Verwendung der Anwendungssoftware,
   d) Übertragen der auf dem Datentransfermodul befindlichen werkzeugbezogenen Daten auf die Datenbank unter Verwendung der Anwendungssoftware,
   e) Aufbereiten und Visualisieren der aufbereiteten werkzeugbezogenen Daten auf einer Nutzerschnittstelle, dadurch gekennzeichnet,
dass die Energieversorgung eine erste Energieversorgungsvorrichtung aufweist, wobei die erste Energieversorgungvorrichtung ein zwischen einer Welle und einer Trägereinheit des Werkzeugs wirkendes Induktionsmodul ist zum Bereitstellen von elektrischer Energie aus einer Drehbewegung der Welle relativ zu der Trägereinheit, wobei die von der ersten Energieversorgungsvorrichtung bereitgestellte elektrische Energie zum kontinuierlichen Betrieb des Werkzeugs verwendet wird. Die Erfindung versteht dabei unter angetriebenem Werkzeug zunächst die eingangs genannten angetriebenen Werkzeuge einer Werkzeugmaschine oder eines Bearbeitungszentrums. Das System gemäß der Erfindung ist dabei so ausgelegt, dass es die werkzeugbezogenen Daten unabhängig von der räumlichen Position des Werkzeuges erfasst, also die Daten erfasst während der Anordnung an oder bei der Werkzeugmaschine, beispielsweise in deren Werkzeughalter, Werkzeugwechsler und

Arbeitsspindel, während einer Lagerzeit, einer Transportzeit. Das System arbeitet also nicht nur dann, wenn das Werkzeug des Systems gerade am Werkstück eingesetzt wird. Erfindungsgemäß gehören zum System neben den genannten Werkzeugen auch Transport- oder Spannmittel für die Werkstücke, die ebenfalls einem Verschleiß unterliegen und daher überwacht und rechtzeitig gewartet werden müssen, sowie die Werkstücke selber, sofern bei diesen nachgewiesen werden soll, welchen Belastungen sie während der Bearbeitung ausgesetzt waren, beispielsweise für einen späteren Qualitätsnachweis. In erster Linie betrifft die Erfindung jedoch die eingangs genannten maschinellen angetriebenen Werkzeuge. Dieses Werkzeug weist erfindungsgemäß einen oder mehrere Sensoren und bevorzugt auf einer Platine angeordnet, einen oder mehrere Speicher, eine Steuerung und eine Energieversorgung auf, sowie eine Kommunikationseinrichtung, insbesondere Antenne. Besonders hervorzuheben ist, dass das System der Erfindung nicht auf eine externe Energieversorgung gebunden ist, da es eine interne Energieversorgung und ggf. ein Powermanagement aufweist, wie weiter unten erläutert wird. Weiter ist besonders hervorzuheben, dass die Vorrichtung kein Datamining betreibend ist, sondern vielmehr die erfassten Daten bereits auswertend und damit komprimierend ist. Auch dies wird nachstehend näher erläutert.

Die Sensoren des erfindungsgemäßen Werkzeuges sind insbesondere ausgewählt aus der Gruppe bestehend aus: Sensor zum Erfassen einer Drehbewegung der Welle des Werkzeugs relativ zu der Trägereinheit des Werkzeugs, zum Erfassen einer Beschleunigung, zum Erfassen von Schwingungen, zum Erfassen einer Temperatur, zum Erfassen einer Feuchtigkeit, zum Erfassen von Verunreinigungen in einem Schmiermittel. Die Sensoren weisen eine Messanordnung zum Erfassen des Indikators auf, ausgewählt aus der Gruppe gebildet durch: Magnet in Wirkverbindung mit einer Induktionsschleife; Permanentmagnet in Wirkverbindung mit einer Induktionsschleife; Hall-Element; Thermoelement; Piezoelement; Kette elektrischer Widerstände; Potentiometer; Schleifkontakte; Bimetallstreifen; Induktionsspule; pH-Elektrode; lichtemittierende Diode in Wirkverbindung mit einer Fotodiode.

Die vom Werkzeug ermittelten Daten sind insbesondere solche Daten, die für seinen Lebenszyklus relevant sind. Es sind dies u.a. die tatsächlich geleisteten Betriebsstunden, erreichte Rotationsgeschwindigkeiten, Schwingungen, Beschleunigungen, Temperaturen und ggf. weitere relevante Daten. Es ist auch erfindungsgemäß, neben den Betriebsstunden nur einen oder zwei weitere der genannten Daten zu ermitteln, beispielsweise, wenn dies für ein bestimmtes Werkzeug ausreichend ist, um seine Wartungsbedürftigkeit oder Austauschbedürftigkeit zu ermitteln. Diese Daten werden automatisch generiert, verarbeitet und gespeichert, alles im Werkzeug.

Der Speicher kann erfindungsgemäß zweigeteilt sein in einen ersten Speicher zum Speichern von werkzeugbezogenen Daten und einen zweiten Speicher zum Speichern des Indikatorwertes. Diese Zweiteilung oder gegebenenfalls Mehrfachteilung der Speichereinheit erlaubt eine klare Zuordnung, aber auch klare Trennung der Daten. Vorzugsweise sind die werkzeugbezogenen Daten, wie zum Beispiel die Werkzeug-Identifikationsnummer, sein Herstellungsdatum, seine Konstruktionsdaten, Betriebshinweise, Anwendungsdaten und dergleichen, in dem ersten Speicher fest programmiert, wohingegen der oftmals zu überschreibende Indikatorwert in einem wiederbeschreibbaren zweiten Speicher abgelegt ist. Bevorzugt sind der erste Speicher und der zweite Speicher unabhängig voneinander ausgewählt aus der Gruppe, bestehend aus: Read Only Memory (ROM); Programmable Read Only Memory (PROM); Erasable Programmable Read Only Memory (EPROM); und Electrically Erasable Programmable Read Only Memory (EEPROM). Der Speicher ist ausgelegt, die Daten von bis zu zehn Jahren dauerhaft aufzuzeichnen. Ein Datenverlust ist damit ausgeschlossen.

Die Platine trägt insbesondere eine Signalverarbeitungseinheit zum Berechnen eines Indikatorwertes aus einem Signal der Sensoreinheit und eine Speichereinheit zum Speichern des Indikatorwertes. Sie weist hierzu insbesondere einen Analog-Digital-Wandler zum Umwandeln des Signals in ein digitales Signal, einen Taktgeber und ein Rechenmodul zum Berechnen des Indikatorwertes aus dem digitalen Signal auf. Insbesondere stellt sie wegen einer intern erfolgenden Verarbeitung von Rohdaten in einen fertigen Indikatorwert aussagekräftige Daten bereit, die eine nur noch geringe Speicher- oder Übertragungskapazität benötigen. Beispielsweise wird anstelle einer sekunden- oder halbsekundengenauen Tabelle von erreichten Drehzahlen drei Werte berechnet, die angeben, wie lange das Werkzeug in einem unteren, einem mittleren und einem (zu) hohen Drehzahlbereich, die jeweils vorher definiert wurden, verblieben ist. Auszulesen sind dann nur noch diese drei Werte. Selbstverständlich ist es auch erfindungsgemäß, die gemessenen Rohdaten zu speichern. Damit wird erfindungsgemäß gerade kein Datamining betrieben, vielmehr sind nur noch sehr wenige, beispielsweise 10, Werte auszulesen und zu übertragen.

Die Energieversorgung weist erfindungsgemäß eine erste Energieversorgungsvorrichtung auf, die von einer Batterie verschieden ausgebildet ist und die mit großem Vorteil langfristig ausreichend elektrische Energie bereit, um die Vorrichtung kontinuierlich zu betreiben, jedoch ohne den Raum einer großen Batterie zu erfordern. Alternativ kann eine Batterie vorgesehen sein. Alternativ oder additiv zur ersten Energieversorgungsvorrichtung kann auch eine Energieverwaltungseinheit zum Aktivieren und Deaktivieren der Vorrichtung oder einer oder mehrerer Einheiten der Vorrichtung vorhanden sein, um die Energieströme innerhalb des Werkzeuges so zu steuern oder regeln, dass der Energieverbrauch in Abhängigkeit von einem Betriebszustand des Werkzeuges minimiert ist. Beispielsweise wird der Energieverbrauch dann minimiert, wenn das Werkzeug das Bearbeitungszentrum verlässt und ins Lager verbracht oder zur Reparatur versendet wird. Die erste Energieversorgungsvorrichtung ist erfindungsgemäß ein zwischen der Welle und der Trägereinheit des Werkzeuges wirkendes Induktionsmodul zum Bereitstellen von elektrischer Energie aus einer Drehbewegung der Welle relativ zu der Trägereinheit oder eine Antenne zum Empfangen von elektrischer Energie von dem Datentransfermodul. Dies ist von Vorteil, da es immer dann elektrische Energie bereitstellt, wenn sich die Welle relativ zu der Trägereinheit dreht, wenn also das Werkzeug in Betrieb und zu überwachen ist. Zusätzlich zur ersten ist erfindungsgemäß auch eine zweite, unterschiedliche Energieversorgungsvorrichtung vorgesehen, so dass das Werkzeugt mit einem Energiemix betreibbar ist, der optional im Zuge eines Energiemanagements bedarfsgerecht gesteuert oder geregelt wird. Erfindungsgemäß sind beispielsweise die folgenden Kombinationen von Energieversorgungsvorrichtungen: Induktionsmodul und Antenne; Induktionsmodul und Kondensator; Induktionsmodul und Akkumulator; Induktionsmodul und Batterie; Induktionsmodul, Antenne und Kondensator; Induktionsmodul, Antenne und Akkumulator; und Induktionsmodul, Antenne und Batterie.

Die Kommunikationseinheit weist bevorzugt eine Antenne zum Senden des Indikatorwertes an das Datentransfermodul mittels Near Field Communication (NFC)-, Radio Frequency Identification (RFID)- oder Bluetooth-Technologie auf. Eine solche drahtlose Übermittlung des Indikatorwertes und gegebenenfalls weiterer Daten an das Datentransfermodul macht eine Kabelverbindung zwischen der Vorrichtung und dem Datentransfermodul entbehrlich, sodass die Vorrichtung vollständig in das Werkzeug integrierbar ist. Die kabellose Verbindung ist bedienerfreundlich, da zum Auslesen des Indikatorwertes keine Steckverbindungen an oftmals für einen Bediener schwer zugänglichen oder sogar gefährlichen Stellen an dem Werkzeug hergestellt werden müssen. Die genannten Technologien erlauben eine drahtlose Übermittlung von Daten, jedoch nur über geringe Distanzen oder nach Paarung von Kommunikationseinheit und Datentransfermodul, sodass ein ausreichender Datenschutz gewährt ist. Besonders bevorzugt weist die Kommunikationseinheit eine Antenne zum Senden des Indikatorwertes und gegebenenfalls weiterer Daten an das Datentransfermodul mittels NFC-Technologie auf. Alternativ dazu ist es erfindungsgemäß denkbar, dass die Kommunikationseinheit einen Stecker mit elektrisch leitenden Kontakten aufweist, um den Indikatorwert und gegebenenfalls weitere Daten an das Datentransfermodul zu senden. Diese drahtgebundene Alternative ist beispielsweise dann zweckmäßig, wenn das Werkzeug von starken elektromagnetischen Felder umgeben ist. Das Werkzeug ist so ausgelegt, dass die Daten selbst dann auslesbar sind, wenn seine Sensoren und Speicher stromversorgungslos sind.

In Ausgestaltung des Verfahrens ist vorgesehen, dass die Schritte a) bis c) vor der Ausführung von Schritt d) für eine Mehrzahl an Werkzeugen durchgeführt werden. Dies erlaubt einem Anwender, sämtliche Werkzeugmaschinen beispielsweise einer Fabrikationshalle abzugehen und deren Werkzeugdaten zu sammeln, bevor sie weitergeleitet werden. Hierdurch kann er sich mit Vorteil auf seinem Datentransfermodul mittels der App beispielsweise den Ist-Zustand seiner Werkzeuge anzeigen lassen, um in Kürze bevorstehende Wartungen einplanen zu können.

Weiter ist erfindungsgemäß vorgesehen, dass der Datenbankzugriff hierarchisiert passwortgeschützt erfolgt, so dass unterschiedliche Nutzer Zugriff auf unterschiedliche Daten und Datenaufbereitungen haben.

Auch kann die Datenbank zu wartende oder auszutauschende Werkzeuge anhand ihrer Seriennummer auf dem Datentransfermodul einem Nutzer anzeigen.

Die systembezogene Aufgabe der Erfindung wird gelöst durch ein System zur kontinuierlichen und dauerhaften Überwachung des Zustandes eines maschinell angetriebenen Werkzeugs und zur Erfassung und Verarbeitung werkzeugbezogener Daten des Werkzeugs, umfassend: Ein Datentransfermodul mit einer Anwendungssoftware, eine Datenbank mit einer Nutzerschnittstelle und wenigstens ein maschinell angetriebenes Werkzeug aufweisend Sensoren, einen Speicher, eine Kommunikationseinrichtung, eine Energieversorgung und eine Steuerung, dadurch gekennzeichnet, dass die Energieversorgung eine erste Energieversorgungsvorrichtung aufweist, wobei die erste Energieversorgungvorrichtung ein zwischen einer Welle und einer Trägereinheit des Werkzeugs wirkendes Induktionsmodul ist zum Bereitstellen von elektrischer Energie aus einer Drehbewegung der Welle relativ zu der Trägereinheit, wobei die von der ersten Energieversorgungsvorrichtung bereitgestellte elektrische Energie zum kontinuierlichen Betrieb des Werkzeugs verwendet wird und dass das System zur Austragung des Verfahrens nach einem der vorhergehenden Ansprüche ausgebildet ist.

Das Datentransfermodul ist erfindungsgemäß ausgewählt aus der Gruppe gebildet durch Smartphones, Handhelds, PDAs (Personal Digital Assistants), Tablets oder industrielle Lesegeräte. Es ist von einem Anwender der Erfindung mitzuführen und an der Werkzeugmaschine gefahrlos einsetzbar. Die im erfindungsgemäßen Werkzeug erfindungsgemäß erzeugten und gespeicherten Daten werden auf Veranlassung eines Nutzers auf das Datentransfermodul übertragen, wobei dieses die Daten wiederum an die erfindungsgemäße Datenbank sendend ist. Derartige Datentransfermodule sind weit verbreitet, einfach anwendbar und zuverlässig. Sie können ohne weiteres von einem Maschinenführer mitgeführt werden. Die Daten des oder der Werkzeuge können zu jeder beliebigen Zeit ausgelesen werden, ein regelmäßiges Auslesen ist nicht erforderlich. Durch die Ausgestaltung von erfindungsgemäßem Werkzeug und Datentransfermodul können bestehende Arbeitsprozesse mit Vorteil unverändert bleiben.

Die erfindungsgemäße Anwendungssoftware (App), ist auf dem Datentransfermodul installiert. Der ausgelesene Indikatorwert und gegebenenfalls weitere Daten des oder der ausgelesenen Werkzeuge werden an die Datenbank weitergeleitet, die insbesondere cloudbasiert ist. Die App ist erfindungsgemäß auch dazu ausgelegt, neben der reinen Datenweiterleitung auch eine grafische Darstellung von mindestens einem Indikator und dem zugehörigen Indikatorwert bereitzustellen, insbesondere bezüglich des gerade eingesetzten Werkzeuges, so dass der Maschinenführer dessen Zustand überwachen kann. Vorzugsweise stellt die App zwei oder mehr Indikatoren nebst zugehörigen Indikatorwerten gleichzeitig dar, beispielsweise Betriebsstunden, Temperatur und Rotationsgeschwindigkeit des Werkzeuges. In einer besonders bevorzugten Ausgestaltung erfolgt die Darstellung des Indikators mittels eines Wortes oder Symbols und die Darstellung des zugehörigen Indikatorwertes mittels einer ampelartigen Anzeige. Zeigt die ampelartige Anzeige grün, so bedeutet dies, dass der Indikatorwert innerhalb eines zulässigen Arbeitsbereiches für den entsprechenden Indikator liegt. Zeigt die ampelartige Anzeige gelb, so bedeutet dies, dass der Indikatorwert in einem Grenzbereich des zulässigen Arbeitsbereiches für den entsprechenden Indikator liegt. Zeigt die ampelartige Anzeige rot, so bedeutet dies, dass der Indikatorwert außerhalb des zulässigen Arbeitsbereiches für den entsprechenden Indikator liegt. Somit ermöglicht die App einen für einen Benutzer intuitiven Überblick über die relevanten Indikatoren und damit über einen Verschleiß- oder Belastungszustand des Werkzeuges.

Die von dem erfindungsgemäßen Datentransfermodul auf die erfindungsgemäße Datenbank übertragenen Daten werden von dieser aufbereitet und über wenigstens eine Nutzerschnittstelle einem Nutzer zur Verfügung gestellt. Die Datenbank ist dabei erfindungsgemäß beispielsweise cloudbasiert, auf einem Zentralrechner geführt oder auch in mobilen Geräten geführt, beispielsweise einem PDA oder dem vorbeschriebenen PDA. Die Aufarbeitung und Visualisierung der spezifischen und detaillierten Werkzeugdaten ist gerade im Zuge der industriellen Weiterentwicklung von Bedeutung, in der eine Bereitstellung von fertig verarbeiteten Daten über fertigungstechnische Teile, Gruppen und Anlagen durch die Teile, Gruppen und Anlagen selber gewünscht ist. Dies wird unter dem Schlagwort "Industrie 4.0" anvisiert. Die Daten werden erfindungsgemäß dezentral generiert und bereitgestellt, um anschließend zentral zusammengefasst und weiterverarbeitet zu werden. Die Aufbereitung der Daten wird weiter unten in der Figurenbeschreibung näher erläutert.

Die Erfindung schlägt also mit großem Vorteil ein einheitliches System aus einer Mehrzahl an Werkzeugen mit Datenerfassung, einem Datentransfermodul und einer Datenbank vor, welches dezentral eine Vielzahl an relevanten Daten sammelt, speichert und auf eine cloudbasierte Datenbank zur Auswertung überträgt, so dass zentral Entscheidungen gefällt werden können. Das erfindungsgemäße System erlaubt aber auch das autonome und lokale Fällen von Entscheidungen aufgrund verdichteter Daten. Die Erfindung ermöglicht so die Lebensdauerverlängerung von Werkzeugen und verringert damit den Materialverbrauch im Produktionsprozess sowie die Wartungsanstrengungen, wodurch die Produktivität mit Vorteil erhöht wird.

Eine bevorzugte Ausführungsform der Erfindung wird nachfolgend anhand mehrerer Figuren erläutert.

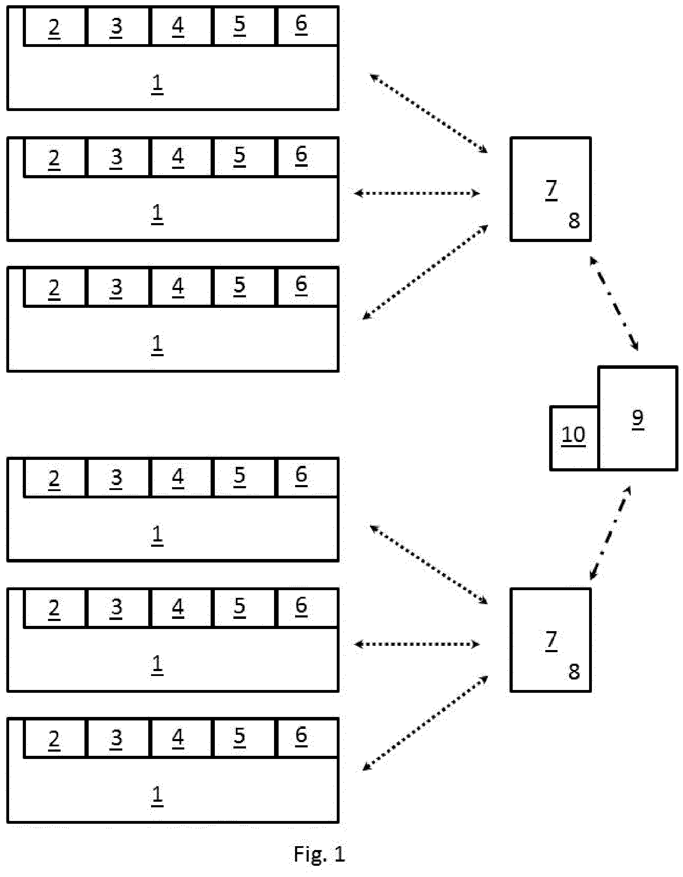

Fig. 1 zeigt ein Schema des erfindungsgemäßen Systems, umfassend eine Mehrzahl aktiver Werkzeuge 1, jeweils aufweisend Sensoren 2, einen Speicher 3, eine Kommunikationseinrichtung 4, eine Energieversorgung 5 und eine Steuerung 6. Das System umfasst weiter eine Mehrzahl an Datentransfermodulen 7, insbesondere Smartphones, von denen nur zwei dargestellt sind, und auf denen eine Anwendungssoftware 8 installiert ist. Weiter umfasst das erfindungsgemäße System eine Datenbank 9 und mindestens eine Nutzerschnittstelle 10 der Datenbank.

Das aktive Werkzeug 1 befindet sich in einer nicht dargestellten Werkzeugmaschine, beispielsweise einer Dreh-, Fräs-, oder Erodiermaschine, insbesondere in deren Werkzeugspeicher oder - wechsler oder in der Werkzeugaufnahme selber. Das gerade aktive oder auch passive, angetrieben Werkzeug 1 ermittelt aufgrund seiner Sensoren 2 einen oder mehrere Indikationsparameter und speichert diese in seinem Speicher 3 kontinuierlich oder in diskreten zeitlichen Abständen ab. In passiven Phasen ist es erfindungsgemäß vorgesehen, nur in größeren zeitlichen Abständen Rohdaten zu ermitteln und/oder zu verarbeiten. Ermittelt werden insbesondere eine Betriebsstundenanzahl und mindestens ein weiterer Indikationsparameter, vorzugsweise eine ganze Reihe ausgewählt aus der Werkzeugtemperatur, der Werkzeugdrehzahl, der Beschleunigung, der Vibrationen. Der Speicher 3 ist darauf ausgelegt, den oder insbesondere die Indikationsparameter über die gesamte Lebensdauer des Werkzeuges zu speichern, beispielsweise für 6.000 Betriebsstunden oder zehn Jahre. Ein ein Datentransfermodul 7 mit sich führender Nutzer liest die gespeicherten Daten mittels der Kommunikationseinrichtung 4 des Werkzeuges 1 aus und überträgt diese auf eine Datenbank 9. Der Datentransfer ist in Fig. 1 als punktierte Linie dargestellt, wobei das Datentransfermodul 7 auch als Energieübertrager auf den oder die Energiespeicher des Werkzeuges dient. Die punktierten Linien sind also Daten- und Energieleitungen.

Die Datenbank 9 stellt die Daten dem Nutzer an einer Nutzerschnittstelle 10 in aufbereiteter Form zur Verfügung. Strichpunktiert dargestellt ist eine insbesondere drahtlose Daten- und Steuerungsleitung zwischen cloudbasierter Datenbank 9 und der Mehrzahl der Datenübertragungsmodule 7, mittels der Daten zur Datenbank 9 und von dieser zur den Datentransfermodulen 7 übermittelt werden.

Die Erfindung erfordert also ein speziell ausgestattetes Werkzeug, ein an dieses angepasstes Datentransfermodul und eine Datenbank mit angepasster Funktionalität. Ebenfalls erforderlich ist eine Anwendungssoftware, die Art und Umfang der Zugangsmöglichkeiten des Nutzers koordiniert und festlegt.

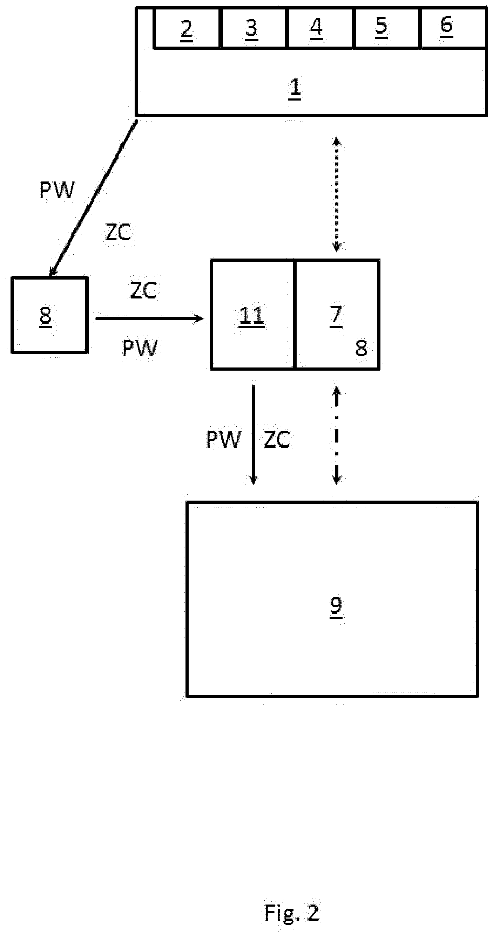

**Fig. 2** zeigt eine Architektur der Datenkommunikation des erfindungsgemäßen Systems, gemäß der in der Datenbank 9 ein nutzerbezogener Zugangscode ZC nebst Password PW erstellt und dem Nutzer 11 per E-Mail, SMS oder auf andere Weise mitgeteilt wird. Den Zugangscode für das PDA erhält der Nutzer 11 mit Zugang des von ihm erworbenen Werkzeuges. Mittels dieser Angaben kann dieser nun die Daten vom aktiven Werkzeug auf sein PDA, insbesondere ein Smartphone, ein Tablet oder ein industrielles Lesegerät, laden und von dort in die Datenbank transferieren, die insbesondere cloudbasiert ist. Dort werden die Daten kundenspezifisch geführt und aufbereitet, wobei sich der Nutzer mit dem nutzerbezogenen Zugangscode nebst Passwort auch in die Datenbank einloggen kann. Erfindungsgemäß können die Zugriffsrechte eines einzelnen Nutzers hierarchisiert sein, also auf ein einziges, mehrere oder viele Werkzeuge begrenzt sein, so dass ein einzelner Nutzer nur Zugang zu Daten einiger, anhand ihrer Seriennummern bestimmter, Werkzeuge hat. Insbesondere können Werks- oder Standortleiter umfangreichere Zugriffsrechte als einem einzelnen Maschinenführer eingeräumt werden, so dass diese damit einen Überblick über eine auch deutlich höhere Anzahl an Werkzeugen haben.

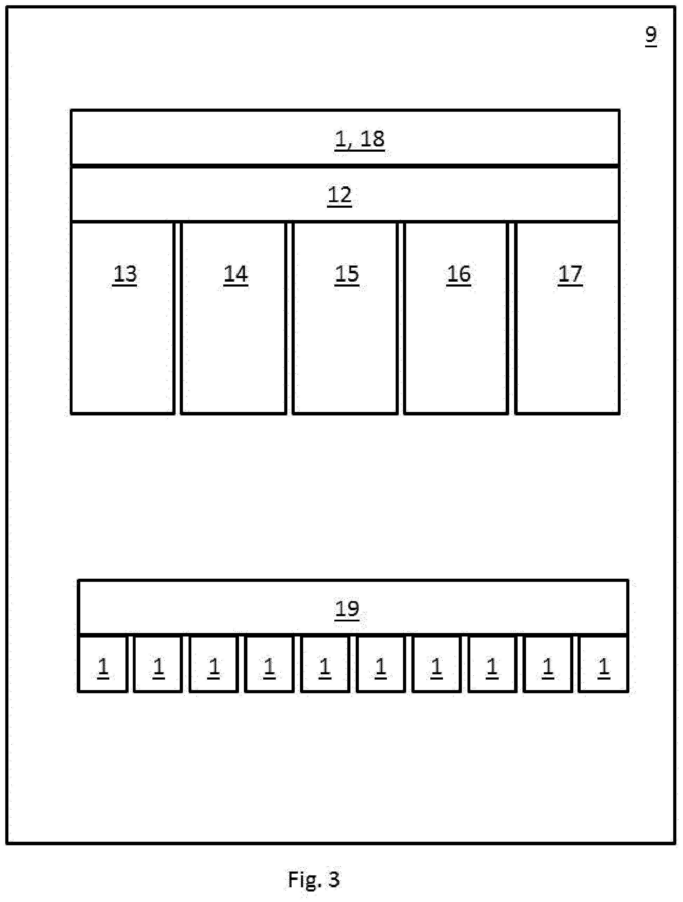

**Fig. 3** zeigt die Architektur der Datenbank und insbesondere die einem Nutzer zugänglichen Informationen aus der Datenbank, mit anderen Worten, die Datenmaske.

Für ein einzelnes Werkzeug 1, identifiziert anhand seiner Seriennummer, werden in der Anzeige "Überblick" 12 ampelcodiert Informationen zu Betriebsstunden, Temperatur, Drehzahl, Intervall und Schwingungen dargestellt. Für einen bestimmten Nutzer nicht zugängliche Daten können dabei grau bleiben, anstatt eine der Ampelfarben anzuzeigen. Die Wertebereiche der einzelnen Ampelfarben sind werkzeugspezifisch und werden vom Datenbankbetreiber ggf. zusammen mit dem Anwender festgelegt und in der Datenbank hinterlegt. Unterhalb der Anzeigeebene "Überblick" und daher von dieser aus zugänglich liegt die Anzeigeebene mit den Detailinformationen 13 bis 17 zu jedem der zuvor angezeigten Informationen.

So gibt die Detailanzeige zu "Betriebsstunden" 13 beispielsweise die Informationen der maximalen Betriebsstunden des Werkzeuges, der aktuellen Betriebsstunden, die verbleibenden Betriebsstunden und die zur nächsten vorsorglichen Kontrolle verbleibende Zeit wider. Eine Warnung erscheint, sobald die maximalen Betriebsstunden erreicht werden oder sobald ein vorbestimmter Wert kurz unterhalb der maximalen Betriebsstundenzahl erreicht wird.

Die Detailanzeige zu "Temperatur" 14 gibt die optimale Arbeitstemperatur des Werkzeuges für dessen dauerhaften Einsatz und für zuverlässige Temperaturmessung an, die erreichten Maximaltemperaturen während des letzten Einsatzes oder Einsatzzyklus und die Anzahl an Betriebsstunden innerhalb bestimmter Temperaturintervalle, die unterhalb, um und oberhalb der optimalen Arbeitstemperatur liegen. Eine möglichst nicht zu überschreitende Maximaltemperatur ist ebenfalls angegeben. Hierbei sind die Temperaturintervalle wiederum werkzeugbezogen durch Nutzer und Datenbankbetreiber definier- und einstellbar. Eine Warnung erscheint, sobald das Werkzeug im höchsten Temperaturintervall betrieben wurde oder die Maximaltemperatur überschritten hat.

Die Detailanzeige zu "Drehzahl" 15 gibt die maximale Drehzahl des Werkzeuges an, die erreichten Maximaldrehzahlen während des letzten Einsatzes oder Einsatzzyklus und die Anzahl an Betriebsstunden innerhalb bestimmter Drehzahlintervalle, die unterhalb der maximalen Drehzahl liegen. Hierbei sind die Drehzahlintervalle wiederum werkzeugbezogen durch Nutzer und Datenbankbetreiber definier- und einstellbar, beispielsweise bis zu 50% der maximalen Drehzahl, zwischen 50 und 85% und zwischen 85 und 100% der maximalen Drehzahl. Eine Warnung erscheint, sobald das Werkzeug die Maximaldrehzahl überschritten hat.

Die Detailanzeige zu "Intervall" 16 gibt die zeitliche Verteilung der Drehzahlen des Werkzeuges per Drehzahlintervall an. Die einzelnen Drehzahlintervalle sind dabei bezogen auf die Maximaldrehzahl, sie liegen insbesondere bei 0% bis 15%, 15% bis 40%, 40% bis 75% und 75% bis 90%. Das Werkzeug soll dabei erfindungsgemäß nicht mehr als 25% seiner Gesamtbetriebsstunden im höchsten Intervall, nicht mehr als 50% im zweithöchsten und bis zu 80% seiner Gesamtbetriebsstunden im dritthöchsten Intervall verbringen. Eine Warnung erscheint, sobald das Werkzeug die Maximalzeit pro Drehzahlintervall erreicht oder überschritten hat.

Die Detailanzeige zu "Vibration" 17 gibt die zeitliche Verteilung von Beschleunigungswerten in g wieder, wobei auch hier Beschleunigungsintervalle bezogen auf die für das spezielle Werkzeug zulässigen Maximalbeschleunigungen bezogen sind. Auch hier ist eine Warnmeldung beim Erreichen oder Überschreiten entweder der Maximalbeschleunigung und/oder der maximalen Zeit im höchsten Beschleunigungsintervall.

Die erfindungsgemäße Datenbank zeigt in einer "werkzeugbezogenen Anzeige" 18 durch einen Benutzer unveränderlich hinterlegte und abrufbare Daten zu einem Werkzeug an, insbesondere die Werkzeugdimensionen, Maximaldrehzahl und -beschleunigung, Kühlschmiermitteldruck und dergleichen mehr.

Die erfindungsgemäße Datenbank weist ebenfalls Anzeigen auf, in denen die Daten einer Vielzahl von Werkzeugen 1 zusammengefasst und aufbereitet sind. Dies ist in Fig. 3 in der unteren Hälfte dargestellt.

In einer "Wartungsanzeige" 19 sind Daten aktualisiert hinterlegt, die Wartung und Reparatur des oder der Werkzeuge betreffen, insbesondere zu gewarteten und/oder ausgetauschten Teilen, Betriebsstunden vor Wartung, Temperaturintervall, Drehzahlintervall und Vibrationsintervall vor Wartung.

Schließlich besteht erfindungsgemäß noch die Möglichkeit, die oben genannten Daten in einem Graphen darzustellen, mit der Zeit auf der X-Achse und mehreren Y-Achsen zu den Parametern.

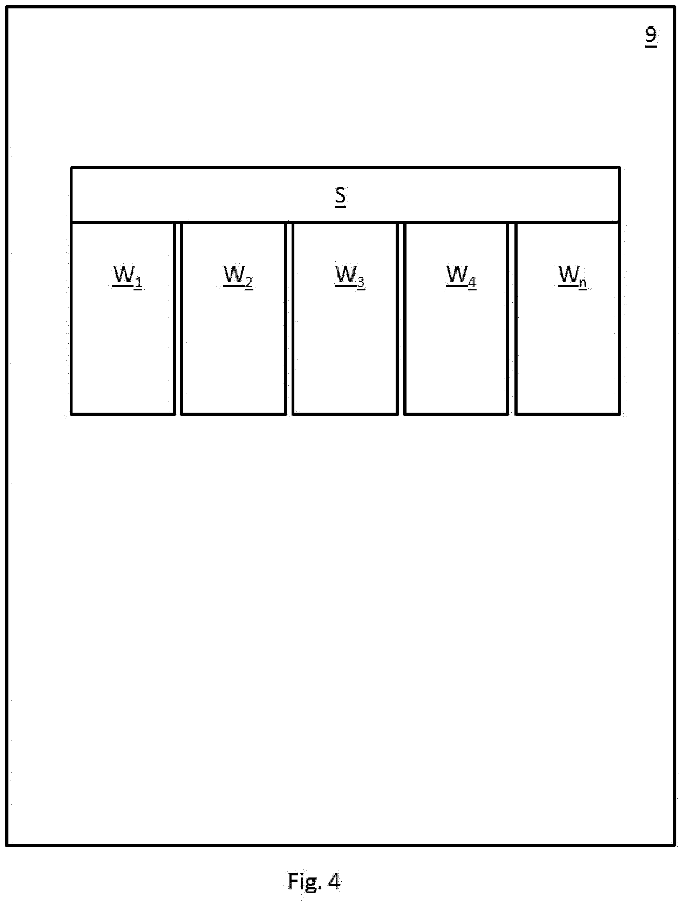

**Fig. 4** zeigt die Datenbank, wie sie sich einem mit hohen Zugriffsrechten ausgestattetem Nutzer darstellt, beispielsweise einer Stabsstelle S. Diese hat Zugriff auf die Datenübersicht einzelner Werke W₁ bis Wₙ bezüglich der Anzahl an Werkzeugen, für die eine Wartung erforderlich ist, die in Kürze gewartet werden müssen, bei denen die Betriebsbedingungen eingestellt werden müssen, die ohne Daten sind, die problemfrei arbeiten und die gerade gewartet werden. Unterhalb der angezeigten Anzahl an in die jeweilige Kategorie fallender Werkzeuge besteht Zugriff auf die Seriennummer der Werkzeuge und über diese auf das jeweilige Datum der Datenerfassung und die spezifischen Werkzeugkennwerte und - daten. Hierdurch erlangt die Stabsstelle unmittelbare Informationen über jedes einzelne Werkzeug.

Einem Nutzer mit mittleren Zugriffsrechten, beispielsweise einem Werksleiter, stellt sich die Datenbank so dar, dass dieser Informationen nur über die Daten der Werkzeuge seines Werkes erhält, ggf. ohne weitergehende Auswertung.

Die vorbeschriebene Erfindung eröffnet einen neuen Zugang zur Fabrik 4.0, indem ein energieautarkes intelligentes angetriebenes Werkzeug Daten erfasst, verarbeitet und verarbeitete Daten zeitlich nicht festgelegt auf ein mobiles Gerät überträgt, an dem die Daten eingesehen werden können und von dem aus sie zu einer umfassenderen Datenbank für weitere technische und betriebswirtschaftliche Auswertungen und Statistiken gesendet und dort zur Verfügung stehen.

### BEZUGSZEICHENLISTE

- 1: Angetriebenes Werkzeug
- 2: Sensoren
- 3: Speicher
- 4: Kommunikationseinrichtung
- 5: Energieversorgung
- 6: Steuerung
- 7: Datentransfermodul
- 8: Anwendungssoftware
- 9: Datenbank
- 10: Nutzerschnittstelle
- 11: Nutzer
- 12: Überblickseben
- 13: Detailanzeige Betriebsstunden
- 14: Detailanzeige Temperatur
- 15: Detailanzeige Drehzahl
- 16: Detailanzeige Intervall
- 17: Detailanzeige Vibration
- 18: Werkzeugbezogene Anzeige
- 19: Wartungsanzeige
- PW: = Passwort
- ZC: = Zugangscode
- S: = Stabsstelle
- W: = Werk

## Patentansprüche

1. Verfahren zur kontinuierlichen und dauerhaften Überwachung des Zustands eines maschinell angetriebenen Werkzeugs (1) und zur Erfassung und Aufbereitung von werkzeugbezogenen Daten des Werkzeugs (1) mittels eines Systems, das System umfassend:
ein Datentransfermodul (7) mit einer Anwendungssoftware (8), eine Datenbank (9) mit einer Nutzerschnittstelle (10) und wenigstens ein maschinell angetriebenes Werkzeug (1) aufweisend Sensoren (2), einen Speicher (3), eine Energieversorgung (5) und eine Steuerung (6),
das Verfahren aufweisend die Schritte:
a) Erfassen von werkzeugbezogenen Daten durch das maschinell angetriebene Werkzeug (1) unter Verwendung der Sensoren (2) und der Steuerung (6),
b) Speichern der erfassten werkzeugbezogenen Daten auf dem Speicher (3) im Werkzeug (1),
c) Übertragen der im Werkzeug (1) gespeicherten werkzeugbezogenen Daten auf ein mobiles Datentransfermodul (7) unter Verwendung der Anwendungssoftware (8),
d) Übertragen der auf dem Datentransfermodul (7) befindlichen werkzeugbezogenen Daten auf die Datenbank (9) unter Verwendung der Anwendungssoftware (8),
e) Aufbereiten und Visualisieren der aufbereiteten werkzeugbezogenen Daten auf einer Nutzerschnittstelle (10),
**dadurch gekennzeichnet,**
**dass** die Energieversorgung (5) eine erste Energieversorgungsvorrichtung aufweist, wobei die erste Energieversorgungvorrichtung ein zwischen einer Welle und einer Trägereinheit des Werkzeugs (1) wirkendes Induktionsmodul ist zum Bereitstellen von elektrischer Energie aus einer Drehbewegung der Welle relativ zu der Trägereinheit, wobei die von der ersten Energieversorgungsvorrichtung bereitgestellte elektrische Energie zum kontinuierlichen Betrieb des Werkzeugs verwendet wird.

2. Verfahren gemäß Anspruch 1, bei dem die Schritte a) bis c) vor der Ausführung von Schritt d) für eine Mehrzahl an Werkzeugen (1) durchgeführt wird.

3. Verfahren gemäß Anspruch 1 oder 2, bei dem der Datenbankzugriff hierarchisiert passwortgeschützt erfolgt.

4. Verfahren gemäß einem der Ansprüche 1 bis 3, bei dem die Datenbank (9) zu wartende oder auszutauschende Werkzeuge (1) anhand ihrer Seriennummer auf dem Datentransfermodul (7) einem Nutzer anzeigt.

5. System zur kontinuierlichen und dauerhaften Überwachung des Zustandes eines maschinell angetriebenen Werkzeugs (1) und zur Erfassung und Verarbeitung werkzeugbezogener Daten des Werkzeugs (1), umfassend:
Ein Datentransfermodul (7) mit einer Anwendungssoftware (8), eine Datenbank (9) mit einer Nutzerschnittstelle (10) und wenigstens ein maschinell angetriebenes Werkzeug (1) aufweisend Sensoren (2), einen Speicher (3), eine Kommunikationseinrichtung (4), eine Energieversorgung (5) und eine Steuerung (6), **dadurch gekennzeichnet, dass** die Energieversorgung (5) eine erste Energieversorgungsvorrichtung aufweist, wobei die erste Energieversorgungvorrichtung ein zwischen einer Welle und einer Trägereinheit des Werkzeugs (1) wirkendes Induktionsmodul ist zum Bereitstellen von elektrischer Energie aus einer Drehbewegung der Welle relativ zu der Trägereinheit, wobei die von der ersten Energieversorgungsvorrichtung bereitgestellte elektrische Energie zum kontinuierlichen Betrieb des Werkzeugs verwendet wird und dass das System zur Austragung des Verfahrens nach einem der vorhergehenden Ansprüche ausgebildet ist.

6. System gemäß Anspruch 5, **dadurch gekennzeichnet, dass** das das Datentransfermodul (7) gewählt ist aus der Gruppe gebildet durch Smartphones, Tablets, PDA's, Lesegeräte.

7. System gemäß Anspruch 5 oder 6, **dadurch gekennzeichnet, dass** die Datenbank (9) cloudbasiert ausgebildet ist und hierarchisierte Zugriffsberechtigungen aufweist.

8. System gemäß Anspruch 5, 6 oder 7, **dadurch gekennzeichnet, dass** die Datenbank (9) sämtliche werkzeugbezogenen Daten seriennummerbezogen hinterlegend ist.

9. System gemäß einem der Ansprüche 5 bis 8, **dadurch gekennzeichnet, dass** die Datenbank (9) aufgrund der ausgewerteten Daten mittels des Datentransfermoduls einem Nutzer mitteilt, welches Werkzeug wann zu warten ist.

## Claims

1. A method for the continuous and uninterrupted monitoring of the state of a mechanically driven tool (1) and for the collection and processing of tool-related data of the tool (1) by means of a system, the system comprising:
a data transfer module (7) having application software (8), a database (9) having a user interface (10) and at least one mechanically driven tool (1) comprising sensors (2), a memory (3), an energy supply (5) and a controller (6),
the method comprising the steps:
a) collection of tool-related data by the mechanically driven tool (1) using the sensors (2) and controller (6),
b) storage of the collected tool-related data in the memory (3) in the tool (1),
c) transfer of the tool-related data stored in the tool (1) on a mobile data transfer module (7) using the application software (8),
d) transfer of the tool-related data located on the data transfer module (7) to the database (9) using the application software (8),
e) processing and visualization of the processed tool-related data on a user interface (10),
**characterized in that**
the energy supply (5) has a first power supply device, wherein the first power supply device is an induction module acting between a shaft and a carrier unit of the tool (1) for supplying electrical energy from a rotary movement of the shaft relative to the carrier unit, wherein the electrical energy supplied by the first power supply device is used for continuous operation of the tool.

2. The method according to Claim 1, wherein steps a) to c) are carried out prior to the implementation of step d) for a plurality of tools (1).

3. The method according to Claim 1 or 2, wherein the database access has hierarchical password protection.

4. The method according to one of Claims 1 to 3, wherein the database (9) displays tools (1) to be maintained or replaced for a user on the data transfer module (7) with the help of their serial number.

5. A system for the continuous and uninterrupted monitoring of the state of a mechanically driven tool (1) and for the collection and processing of tool-related data on the tool (1), comprising:
A data transfer module (7) with an application software (8), a database (9) with a user interface (10) and at least one mechanically driven tool (1) comprising sensors (2), a memory (3), a communication device (4), a power supply (5) and a controller (6), **characterized in that** the power supply (5) has a first power supply device, wherein the first power supply device is an induction module acting between a shaft and a carrier unit of the tool (1) for supplying electrical energy from a rotary movement of the shaft relative to the carrier unit, wherein the electrical energy supplied by the first power supply device is used for the continuous operation of the tool, and that the system is designed to implement the method according to one of the preceding claims.

6. The system according to Claim 5, **characterized in that** the data transfer module (7) is selected from the group made up of smart phones, tablets, PDA's, reading devices.

7. The system according to Claim 5 or 6, **characterized in that** the database (9) is cloud-based and has hierarchical access authorizations.

8. The system according to Claim 5, 6 or 7, **characterized in that** all tool-related data are deposited in the database (9) based on serial numbers.

9. The system according to one of Claims 5 to 8, **characterized in that** due to the data evaluated by means of the data transfer module, the database (9) notifies a user of which tool is to be maintained when.

## Revendications

1. Procédé, destiné à superviser durablement et en continu l'état d'un outil (1) entraîné mécaniquement et à capturer, ainsi qu'à préparer des données de l'outil (1) rapportées à l'outil au moyen d'un système, le système comprenant :
un module (7) de transfert de données pourvu d'un logiciel d'application (8), une base de données (9) pourvue d'une interface utilisateur (10) et au moins un outil (1) entraîné mécaniquement, comportant des capteurs (2), une mémoire (3), une alimentation énergétique (5) et un système de commande (6),
le procédé comportant les étapes consistant à :
a) capturer des données rapportées à l'outil par l'outil (1) entraîné mécaniquement, en utilisant les capteurs (2) et le système de commande (6),
b) mémoriser les données rapportées à l'outil dans la mémoire (3) dans l'outil (1),
c) transférer les données rapportées à l'outil mémorisées dans l'outil (1) vers un module (7) de transfert de données mobile, en utilisant le logiciel d'application (8),
d) transférer les données rapportées à l'outil qui se trouvent dans le module (7) de transfert de données vers la base de données (9), en utilisant le logiciel d'application (8),
e) préparer et visualiser les données rapportées à l'outil préparées sur une interface utilisateur (10),
**caractérisé**
**en ce que** l'alimentation énergétique (5) comporte un premier dispositif d'alimentation énergétique, le premier dispositif d'alimentation énergétique étant un module d'induction agissant entre un arbre et une unité porteuse de l'outil (1), pour la mise à disposition d'une énergie électrique à partir d'un mouvement en rotation de l'arbre par rapport à l'unité porteuse, l'énergie électrique mise à disposition par le premier dispositif d'alimentation énergétique étant utilisée pour le fonctionnement en continu de l'outil.

2. Procédé selon la revendication 1, lors duquel les étapes a) à c) sont réalisées pour une multiplicité d'outils (1) avant la réalisation de l'étape d).

3. Procédé selon la revendication 1 ou 2, lors duquel l'accès à la base de données est hiérarchisé et protégé par mot de passe.

4. Procédé selon l'une quelconque des revendications 1 à 3, lors duquel, la base de données (9) affiche à l'attention d'un utilisateur des outils (1) qui nécessitent une maintenance ou un échange à l'aide de leur numéro de série sur le module (7) de transfert de données.

5. Système, destiné à superviser durablement et en continu l'état d'un outil (1) entraîné mécaniquement et à capturer, ainsi qu'à préparer des données de l'outil (1) rapportées à l'outil au moyen d'un système, le système comprenant :
un module (7) de transfert de données pourvu d'un logiciel d'application (8), une base de données (9) pourvue d'une interface utilisateur (10) et au moins un outil (1) entraîné mécaniquement, comportant des capteurs (2), une mémoire (3), un dispositif de communication (4), une alimentation énergétique (5) et un système de commande (6), **caractérisé en ce que** l'alimentation énergétique (5) comporte un premier dispositif d'alimentation énergétique, le premier dispositif d'alimentation énergétique étant un module à induction agissant entre l'arbre et une unité porteuse de l'outil (1), pour la mise à disposition d'une énergie électrique à partir d'un mouvement en rotation de l'arbre par rapport à l'unité porteuse, l'énergie électrique mise à disposition par le premier dispositif d'alimentation énergétique étant utilisée pour le fonctionnement en continu de l'outil, et **en ce que** le système est conçu pour mettre en œuvre le procédé selon l'une quelconque des revendications précédentes.

6. Système selon la revendication 5, **caractérisé en ce que** le module (7) de transfert de données est sélectionné dans le groupe formé par les smartphones, les tablettes, les PDA, les lecteurs.

7. Système selon la revendication 5 ou 6, **caractérisé en ce que** la base de données (9) est conçue sur la base d'un nuage et comporte des droits d'accès hiérarchisés.

8. Système selon la revendication 5, 6 ou 7, **caractérisé en ce que** la base de données (9) sauvegarde l'ensemble des données rapportées à l'outil par rapport aux numéros de série.

9. Système selon l'une quelconque des revendications 5 à 8, **caractérisé en ce que** sur la base des données évaluées, la base de données (9) communique à l'utilisateur au moyen du module de transfert de données quel outil nécessite une maintenance.
